Europäisches Patentamt

European Patent Office

Office européen des brevets

(11) Publication number: **0 422 911 A2**

# EUROPEAN PATENT APPLICATION

(21) Application number: 90311089.8

(22) Date of filing: 10.10.90

(51) Int. Cl.5: **G06F 15/68**

(30) Priority: 11.10.89 GB 8922853

(43) Date of publication of application:
17.04.91 Bulletin 91/16

(84) Designated Contracting States:
DE FR IT NL SE

(71) Applicant: GEC-MARCONI LIMITED
The Grove, Warren Lane
Stanmore, Middlesex HA7 4LY(GB)

(72) Inventor: Coombs, Timothy Arthur
31 Central Drive
St. Albans, Hertfordshire, AL4 0UX(GB)

(74) Representative: Waters, Jeffrey et al
GEC Patent Department (Chelmsford Office)
GEC-Marconi Research Centre, West
Hanningfield Road
Great Baddow, Chelmsford, Essex CM2
8HN(GB)

(54) Image interpretation.

(57) In the field of image processing it is often useful to have a means of identifying relevant regions from the image. This invention provides a technique for recognising certain regions of an image by determining parameters of a region of the image, and comparing these in order to identifying the type of region.

FIG. 1.1

FIG. 1.2

FIG. 1.3

FIG. 1.4

FIG. 1.5

FIG. 1.6

FIG. 1.7

Xerox Copy Centre

EP 0 422 911 A2

FIG.1.8

FIG.1.9

FIG.1.10

FIG.1.11

2

**IMAGE INTERPRETATION**

This invention relates to a method and apparatus for identifying regions of a pixelated image and relating these regions to the objects that are being viewed.

There are many applications of electronic imagery where an image of a scene is obtained which is difficult to interpret either because of poor light, or it may be a heat sensitive image, or the image may be of a complex scene for example an aerial view of a landscape. Known segmentation processes can be applied to such images to clarify them, however it is often required that regions of the image be identified by machine rather than by the human eye. This may be due to a lack of time on the part of the operator to survey the scene or a difficulty in interpreting what data is being displayed.

In accordance with a first aspect of this invention there is provided a method of analysing an image of an area of land comprising identifying regions of the image having intensities within selected ranges and classifying at least one region in dependence upon parameters of the shape of that region.

In accordance with a second aspect the invention provides apparatus for analysing an image of an area of land comprising: means for identifying regions of the image having intensities within selected ranges, and means for classifying at least one region in dependence upon parameters of the shape of that region.

By employing the invention there is provided a means of determining parameters relating to the shape of a region in a image. The parameters may be the length and the area of the region. From a comparison of the ratio of these it is possible to determine whether the region is elongate or of a more nucleated shape, enabling for example such features as roads and rivers to be identified.

The invention will now be described by way of example only with reference to the accompanying drawings of which:

Figure 1 shows, schematically, a method of image enhancement;

Figure 2 illustrates various types of shape that may be identified using the invention; and

Figure 3 schematically illustrates a scene to which the invention may be applied.

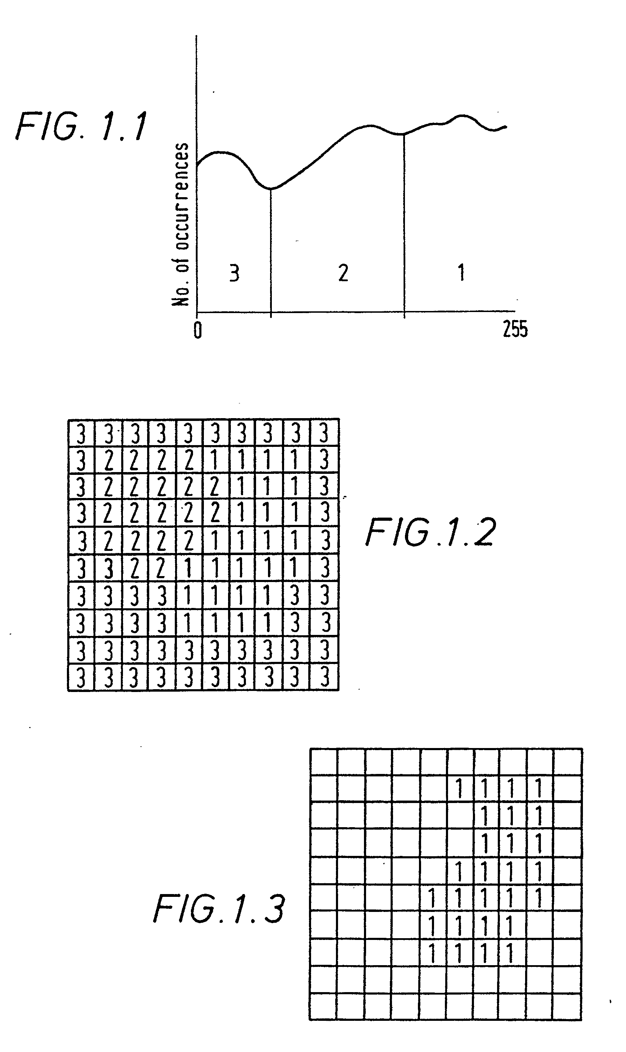

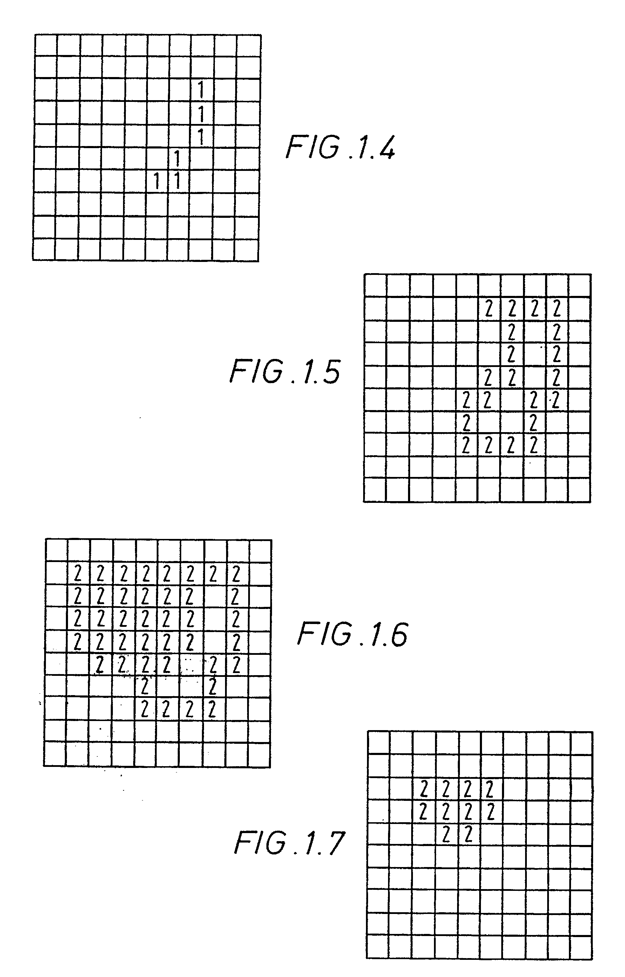

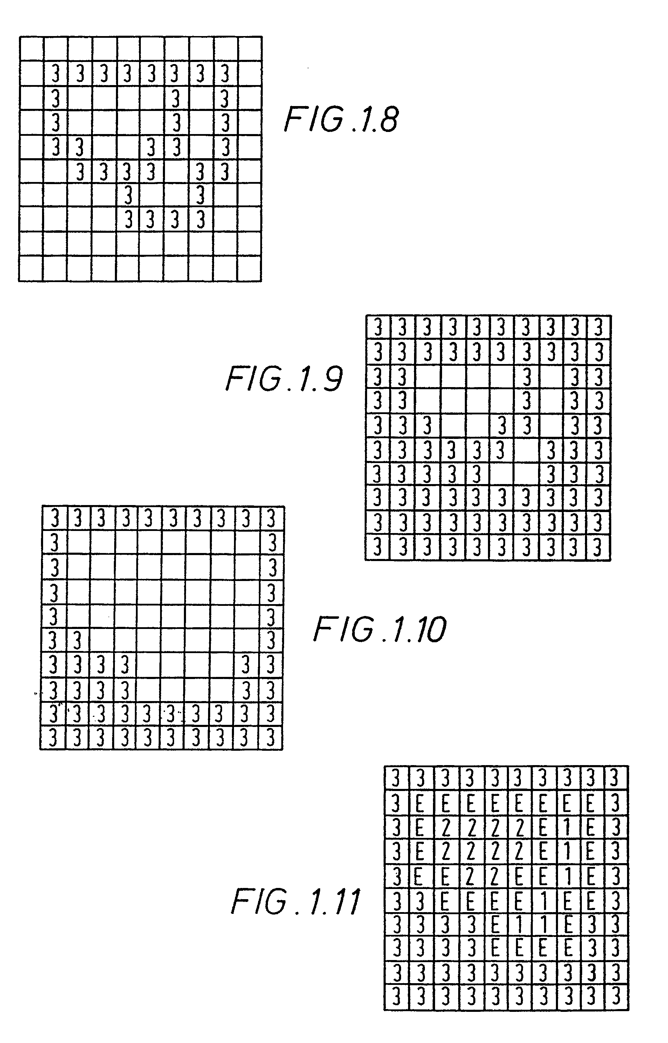

Referring to Figure 1, an enhanced pixellated image is obtained by first obtaining an image of a scene in pixelated form (not shown) and assigning to each pixel a grey level between 0 and 255 representative of its intensity. From this a plot of number of occurrences against grey level is obtained, as illustrated in Figure 1.1, and minima recorded. These minima are used to define three subranges 1, 2 and 3 as shown.

Returning to the original pixelated image, each pixel is assigned a value 1, 2 or 3, as shown in Figure 1.2, corresponding to the subrange in which its grey value falls, all edge pixels being assigned a value corresponding to the lowest subrange, in this case 3.

The new image is scanned and pixels within the highest range located as illustrated in Figure 1.3. Those having adjacent pixels all in the same subrange as themselves are confirmed, Figure 1.4, whilst all those not having all adjacent pixels within the same range are assigned a grey value in the next adjacent range as shown in Figure 1.5. The process is then repeated on the next range and in Figure 1.6 all the pixels in subrange 2 have been identified and those surrounded by like pixels are as indicated in Figure 1.7, those not so surrounded are assigned a value in the next subrange (Figure 1.8). The process is again repeated for the third subrange as illustrated in Figures 1.9 and 1.10, this eventually leaving the pixels shown in Figure 1.11 which will never be confirmed by the process. These are preferably set at a contrasting intensity level (E) to the surrounding regions so as to form the outline of the object which is being viewed. The object being viewed is now represented by the 1, 2 and 3 levels shown in Figure 1.11.

For reasons of clarity the invention has been shown employed on a minor scale, but it will be realised in practical applications the pixel array will be several hundreds of pixels square, and will comprise many subranges.

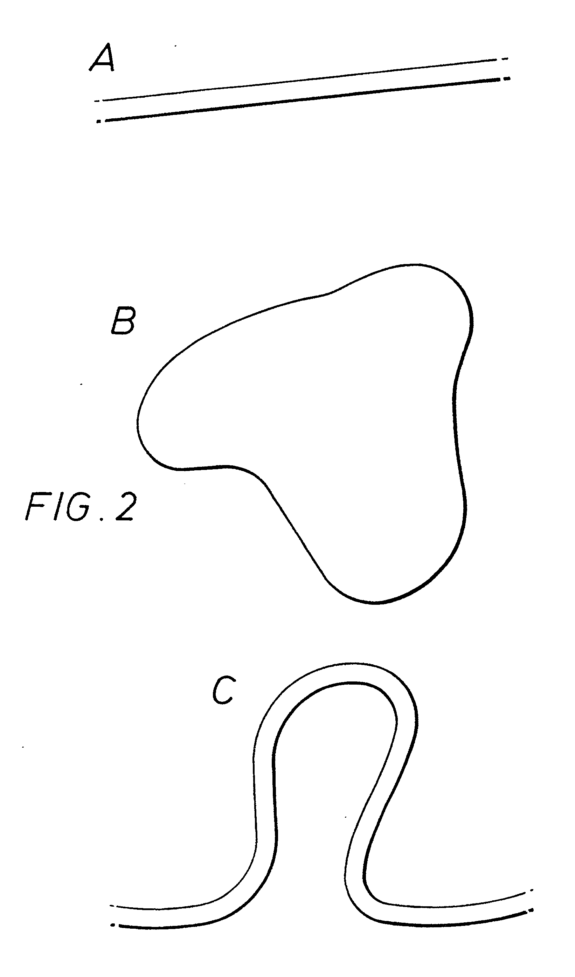

Having employed the method of Figure 1 to give a sharp clearly defined image made up of homogeneous regions having clearly defined boundaries, the image can then be applied to identify shapes within the image, several types of which are displayed schematically in Figure 2.

By obtaining the parameters for example, area, perimeter and length of each region in a segmentated display, the type of region being viewed can be classified into one of the groups shown Figure 2. A long thin region A is characterised by having a high ratio of the length of its perimeter (in terms of pixels) to its area. A more regular shape B will have a large area to perimeter ratio, although this will vary depending on how many pixels the image takes up altogether but this can be taken account of by the processing. Other shapes for example C can also be identified. C having a large perimeter to area ratio but will fit in a smaller 'box' than the straight object A, or alternatively it may be identified by determining how many times the region crosses a particular line or the image, preferably corresponding to a line of a raster scan.

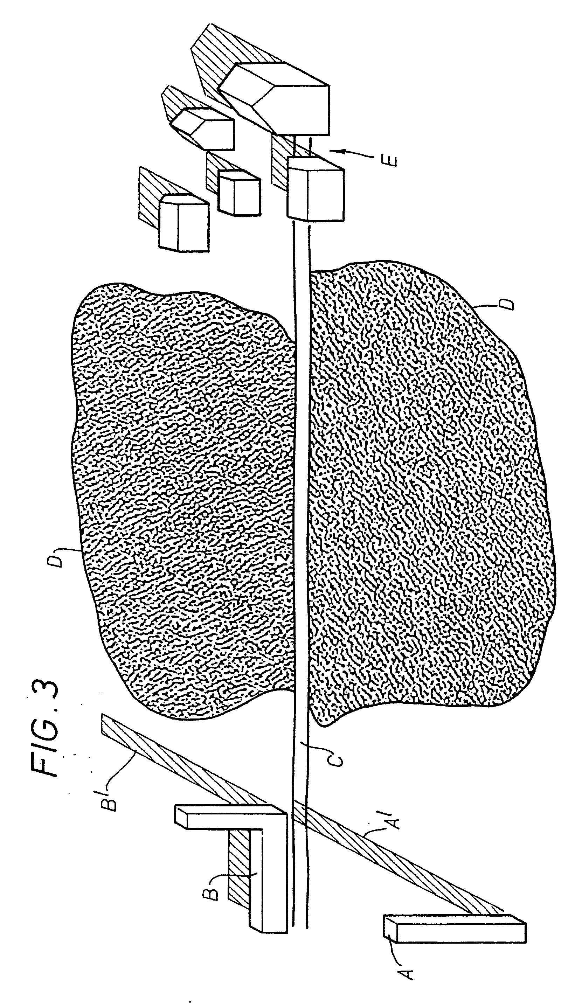

Figure 3 shows a typical scene that may be viewed with an imager and comprises a large buildings A, a church B, a road C running through fields D to a town E. It will be appreciated that in an image of the scene, the intensities of the respective areas A - E will be contrasting.

Using the technique described above, the scene will be viewed and divided into clearly defined regions, buildings A and B, their respective shadows A1, B1, the road C, fields D and various minor areas in the town E. The object of the process is to identify lines of communication such as roads C from the image. C will be identified by its parameters, (long and thin), as a road or other means of communication for example a railway line or canal. However shadows A1 and B1 will also form a straight line. This could cause confusion in interpretation of the image. According to a second aspect of the invention, the lines of communication are differentiated from such lines as shadows in the following way. The technique relies on the fact that roads are generally bordered on each side by fields, which will have a uniform but contrasting intensity, as well as unique parameters. Such shadows will be eliminated from the final image by suppressing the set lines (identified by their intensity and parameters of the form shown in Figure 2) which are not surrounded on at least one side by those regions identified from their intensity and parameters as illustrated in Figure 2 as fields. The final image will therefore only show straight regions bordered by large uniform areas (i.e. fields), therefore ignoring confusing patterns that may arise in built up areas. This enables all the unwanted information to be removed from the image in order to leave just the lines of communication which it is desired to identify. Of course, it is not necessary in performing the invention to use the method described to produce a segmented image. Other methods of segmentation may be employed. The attention of the reader is drawn to our co-pending UK patent application number 8922851 which describes and claims the segmentation technique referred to.

The invention may be applied to any type of image to identify any shape region or coloured areas of interest.

## Claims

1. A method of analysing an image of an area of land comprising identifying regions of the image having intensities within selected ranges and classifying at least one region in dependence upon parameters of the shape of that region.

2. A method as claimed in Claim 1 wherein a region is classified in dependence upon the ratio of the length of the perimeter of the region and area of the region.

3. A method as claimed in Claim 2 wherein a further comparison is made between the length of the perimeter and area of the minimum sized regular shaped portion of the image in which the region may be placed.

4. A method as claimed in any preceding claim comprising identifying whether a long thin region having intensity values within a selected range is bordered by a region having intensity values within another selected range, and for which the ratio of area to perimeter of that other region is above a predetermined value.

5. A method as claimed in any preceding claim for identifying lines of communication.

6. A method as claimed in any preceding claim for identifying the position of the image sensor.

7. A method as claimed in any preceding claim wherein identification of regions of the image having intensities within selected ranges comprises the steps of assigning a grey valve within a predetermined range to each pixel and dividing the image into regions dependent upon the density of occurrence of selected grey values.

8. A method as claimed in claim 7 wherein the image is divided into regions by determining threshold grey values that would substantially correspond to each minima on a plot of number of occurrences against grey value, defining mutually exclusive subranges bounded by the threshold values, for each subrange identifying pixels having a grey value within the selected subrange, confirming those having a predetermined number of adjacent pixels also within that subrange whilst assigning those that do not have the predetermined number of adjacent pixels a grey level within the next adjacent subrange.

9. Apparatus for analysing an image of an area of land comprising: means for identifying regions of the image having intensities within selected ranges, and means for classifying at least one region in dependence upon parameters of the shape of that region.

10. Apparatus as claimed in claim 9 wherein the classifying means classifies a region in dependence upon the ratio of the length of the perimeter of the region and area of the region.

11. Apparatus as claimed in Claim 10 wherein means are provided for making a further comparison between the length of the perimeter and area of the minimum sized regular shaped portion of the image in which the region may be placed.

12. Apparatus as claimed in any of claims 9, 10 or 11 comprising means for identifying whether a long thin region having intensity values within a selected range is bordered by a region having intensity values within another selected range, and for which the ratio of area to perimeter of that other region is above a predetermined value.

13. Apparatus as claimed in any of Claims 9 to 12 comprising means for identifying lines of communication.

14. Apparatus as claimed in any of Claims 9 to 13 means for identifying the position of the image sensor.

15. Apparatus as claimed in any of claims 9 to 14 wherein the means for identifying regions of the image having intensities within selected ranges comprises means for assigning a grey value within a predetermined range to each pixel, and means for dividing the image into regions dependent upon the density of occurrence of selected grey values.

16. Apparatus as claimed in claim 15 comprising means for dividing the image into regions by determining threshold grey values that would substantially correspond to each minima on a plot of number of occurrences against grey value, means for defining mutually exclusive subranges bounded by the threshold values, means for identifying for each subrange pixels having a grey value within the selected subrange, means for confirming those having a predetermined number of adjacent pixels also within that subrange and assigning those that do not have the predetermined number of adjacent pixels a grey level within the next adjacent subrange.

FIG. 1.1

No. of occurrences

3

2

1

0

255

FIG.1.2

| 3 | 3 | 3 | 3 | 3 | 3 | 3 | 3 | 3 | 3 |
|---|---|---|---|---|---|---|---|---|---|
| 3 | 2 | 2 | 2 | 2 | 1 | 1 | 1 | 1 | 3 |
| 3 | 2 | 2 | 2 | 2 | 2 | 1 | 1 | 1 | 3 |
| 3 | 2 | 2 | 2 | 2 | 2 | 1 | 1 | 1 | 3 |
| 3 | 2 | 2 | 2 | 2 | 1 | 1 | 1 | 1 | 3 |
| 3 | 3 | 2 | 2 | 1 | 1 | 1 | 1 | 1 | 3 |
| 3 | 3 | 3 | 3 | 1 | 1 | 1 | 1 | 3 | 3 |
| 3 | 3 | 3 | 3 | 1 | 1 | 1 | 1 | 3 | 3 |
| 3 | 3 | 3 | 3 | 3 | 3 | 3 | 3 | 3 | 3 |
| 3 | 3 | 3 | 3 | 3 | 3 | 3 | 3 | 3 | 3 |

FIG.1.3

|  |  |  |  |  |  | 1 | 1 | 1 | 1 |
|---|---|---|---|---|---|---|---|---|---|
|  |  |  |  |  |  |  | 1 | 1 | 1 |
|  |  |  |  |  |  |  | 1 | 1 | 1 |
|  |  |  |  |  | 1 | 1 | 1 | 1 |  |
|  |  |  |  | 1 | 1 | 1 | 1 | 1 |  |
|  |  |  |  | 1 | 1 | 1 | 1 |  |  |
|  |  |  |  | 1 | 1 | 1 | 1 |  |  |
|  |  |  |  |  |  |  |  |  |  |
|  |  |  |  |  |  |  |  |  |  |

FIG .1.4

FIG .1.5

FIG .1.6

FIG .1.7

FIG.1.8

FIG.1.9

FIG.1.10

FIG.1.11

A

B

FIG. 2

C

FIG. 3